# EUROPEAN PATENT APPLICATION

(11) **EP 2 680 210 A1**
(43) Date of publication of application: **01.01.2014**
(21) Application number: 12305776.2
(22) Date of filing: 29.06.2012
(51) Int. Cl.: G06Q 30/02

(54) **Method and system for cross-platform content recommendation**

(71) Applicant: Alcatel Lucent, 75007 Paris (FR)
(72) Inventor: Picault, Jerome, 91620 NOZAY (FR); Marie, Nicolas, 91620 NOZAY (FR)
(74) Representative: Demulsant, Xavier

(57) **Abstract**

A method for cross-platform content recommendation to a user (7) interacting through a social platform (10), said method comprising the following steps:
- collecting information about users' interactions with social objects (1-6, 21) through a plurality of social platforms (10-11);
- formatting collected information into user-specific social object navigation paths (17-19) over time through the social objects (1-6, 21);
- searching within formatted social object navigation paths (17-19) at least one social object navigation path of a second user (9) including a social object navigation sub-path similar to a recent social object navigation path of a first user (7);
- recommending to the first user (7), at least a social objet (6, 21) following, in the social object navigation path (19) of the second user (9), the social object navigation sub-path.

## Description

The present invention relates to content recommendation over social networks.

### BACKGROUND OF THE INVENTION

There is no doubt that social platforms are undergoing a worldwide boom (such as Facebook, YouTube, or Flickr for example) and the number of their members is ever growing.

These social platforms are mainly centered on "social objects" utilized as medium of interactions. Such social objects may relate to physical objects/things (as in Internet of Things) or, more generally, to anything that provokes/supports/maintains a conversation (event, multimedia contents, people, activity for example). Notably, the web is full of such digital social objects, as resources providing an interaction canal, such as video contents (YouTube, Dailymotion), pictures (Flickr, Picasa), or events (Facebook).

The phenomenon of interacting around social objects is also called "object centered sociality" which constitutes today a specific and widespread kind of numeric communication coexisting with others like micro-blogging, mail, or forums.

Nevertheless, even if widely used, social networks and content sharing platform empowered by social networks do only provide a fragmented experience in consuming information as their information channels are kept isolated (issue often called "walled garden problem"). In fact, these platforms are separated and their contents are organized into isolated communication channels, causing suboptimal discussions and interactions which limit a lot the user experience to the extent that it is quite difficult to know "where" to interact. This may be more critical in a mobility context wherein browsing and interaction are in general not easy. Hence, the native separation between social networks does not bode well for their success.

In fact, if object-centered sociality gives a better context to social interactions, the remaining problem is, with the ever-growing quantity of social objects of various kinds, how to propose a smart navigation experience of social objects and how to overcome the actual relative bulk and walled garden problem. In other words, the problem is how to assist users to navigate through different social resources on different social platforms.

### SUMMARY OF THE INVENTION

One object of various embodiments is to propose cross-social platforms navigation axes permitting users to overcome monaxial navigation aspect through social platforms.

Another object of various embodiments is to predict the most probable social objects, whatever the social platform on which they are available, that a given user will interact therewith.

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

Various embodiments relate to methods for cross-platform content recommendation to a user interacting through a social platform, comprising the following steps
- collecting information about users' interactions with social objects through a plurality of social platforms;
- formatting collected information into user-specific social object navigation paths over time through the social objects;
- searching within formatted social object navigation paths at least one social object navigation path of a second user including a social object navigation sub-path similar to a recent social object navigation path of a first user;
- recommending to the first user at least a social objet following, in the social object navigation path of the second user, the social object navigation sub-path.

In accordance with a broad aspect, the above methods further comprise a computation step of similarity between a first social object navigation path and a second social object navigation path.

In accordance with another broad aspect, the computation step of similarity between a first social object navigation path and a second social object navigation path includes a pattern matching step.

In accordance with another broad aspect, the above methods further comprise a step of filtering noisy data from the collected information.

In accordance with another broad aspect, the above methods further comprise a step of determining a discriminatory criterion between the recommended social objects.

In accordance with another broad aspect, the above methods further comprise a step of presenting the recommended social objects into different navigation axes in function of the determined discriminatory criterion.

Various embodiments further relate to systems for cross-platform content recommendation to a user interacting through a social platform, comprising
- means for collecting information about users' interactions with social objects through a plurality of social platforms;
- means for formatting collected information into user-specific social object navigation paths over time through the social objects;
- means for searching within formatted social object navigation paths at least one social object navigation path of a second user including a social object navigation sub-path similar to a recent social object navigation path of a first user;
- means for recommending to the first user, at least a social objet following, in the social object navigation path of the second user, the social object navigation sub-path.

Various embodiments further relate to a computer program product for performing the above methods.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### BRIEF DESCRIPTION OF THE DRAWINGS

The above and other objects and advantages of various embodiments will become apparent from the detailed description of preferred embodiments, considered in conjunction with the accompanying drawing, in which
- Fig.1 is a schematic diagram illustrating functional components according to one embodiment;
- Fig.2 is a schematic diagram illustrating a use case according to one embodiment.

### DETAILED DESCRIPTION OF ILLUSTRATIVE EMBODIMENTS

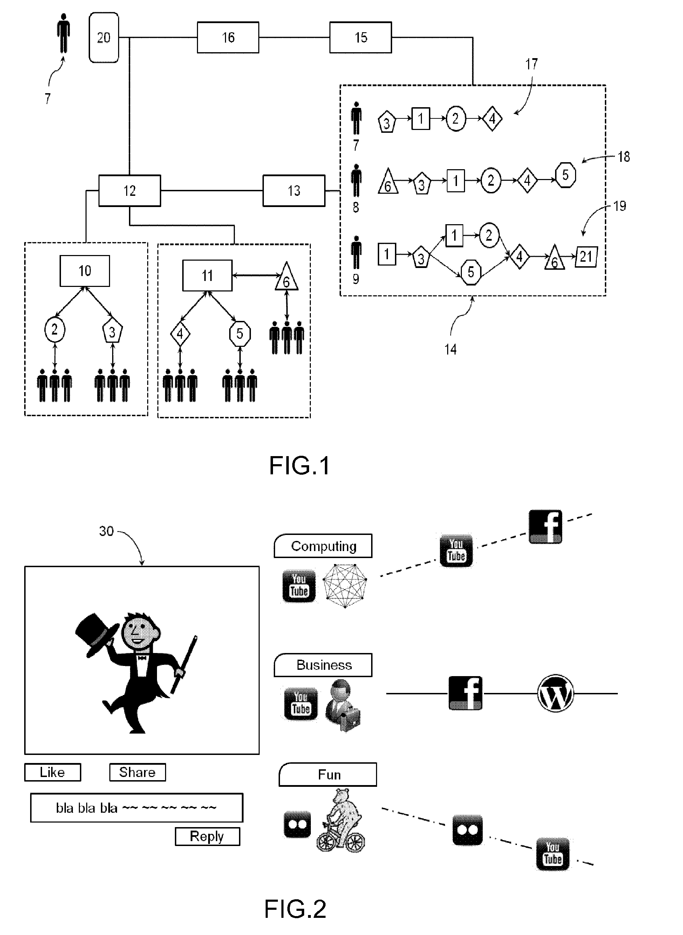

With reference to figure 1, the present disclosure is based on an architecture involving a plurality of social platforms **10-11** and comprising
- a social interaction monitor **12** configured to capture and collect information about social interactions of users **7-9** through social platforms **10-11;**
- a social object filter **13** programmed for formatting collected information into navigation paths per user through social objects **1-6** involved in user interactions through the social platforms **10-11;** and
- a social path analyser **15** programmed for analyzing the navigation paths in order to produce possible interesting content for each user.

By social platforms **10-11,** it is intended to mean any web site or more generally any appropriate environment (such as YouTube, MySpace, Facebook, Flickr, Google +, Bell Labs Social Book, or Twitter) wherein users can interact around social objects **1-6** (for example, video, photo, text, presentation, event, ballot).

Generally, these social objects **1-6** trigger social interactions through the social platform functionalities (such as "I like", "comment", "share", "play/replay", "display", "participate", "vote", "forward", "save", "add to" or the like).

In fact, for a given user **7** provided with a communication device **20** (a smartphone, a laptop, a desktop computer, a personal digital assistant for example) enabling him/her to interact through social platforms **10-11,** the social interaction monitor **12** is programmed to collect information regarding any social interaction of this user **7** on social platforms **10-11.**

The information collected from the social platforms **10-11** by the social interaction monitor **12** include:
- an address (such as an URI: Uniform Resource Identifier) of the social object **4** that the user **7** is interacting therewith, as well as of the social environment surrounding this social object **4** (for example, the list of people interacting through this social object or the album to which the social object belongs such as http://www.deezer.com/fr/music/alain-bashung/bleu-petrole-104644#music/alain-bashung/bleu-petrole-104644);
- a timestamp, or more generally any other date datatype (i.e. any temporal information), of beginning of interaction with the social object **4;** and
- if possible, a duration of interaction with the social object **4.**

In one embodiment, the collected information by the social interaction monitor **12** relate to the act of interacting (for example, the duration of the interaction, the date of the interaction or the type of the interaction such as "comment", "display", "resize", "replay", "share", "forward", "I like", "vote") with an addressable (via an URI for example) social object **1-6** ("video", "text", "image", for example) through a social platform **10-11** and not to the content of the interaction itself (such as the content of the posted comment, the entity to which a social object is forwarded, or the content of the vote).

Advantageously, the social interaction monitor **12** may be implemented in the form of
- a plug-in for a web browser such as Firefox®, Internet Explorer® or Chrome® that monitors user interactions;
- dedicated APIs when they are available on the social platforms (for example Open Social APIs such as in Netlog, or MySpace).

Alternatively, the social interaction monitor **12** may be implemented at lower level, through deep packet inspection (such as Kindsight® product) which enables to get additional information.

Advantageously, the social interaction monitor **12** may be configured to collect information about the social interaction of the user **7** only during typical period of time (for example, one day per week, or periodically for a predefined duration).

In one embodiment, the user **7** indicates to the social interaction monitor **12,** in a configuration phase, which social platforms **10-11** that he/she interacts with by selecting relevant ones - from a predefined list of social platforms **10-11 -** which will be used for providing him/her with content.

Alternatively or additionally, the social interaction monitor **10** is configured to detect (for example, from the recent navigation history, or from the visited social networks weighted by time spent thereon) the social platforms **10-11** which will be used for providing the user **7** with content.

The collected information by the social interaction monitor **12** are communicated to a social object filter **13** configured to filter noise (i.e. noisy data) from "real" interactions with social objects **1-6** and to format filtered information in coherent form.

In particular, the filter **13** is in charge, for each user, of removing from raw logs of social objects **1-6** those for which the level of interaction with the user is not meaningful (for example, displaying a video content **2** for a period of time less than a predefined duration or less than a predefined percentage of the total duration of the video content **2).** Accordingly, this filtering step can be based on several parameters, for example,
- thresholds based on the duration of interaction and/or the number of interaction with the social object **1-6** (notably, a social object may be the subject of more than one interaction, such as "play" and "share", "play" and "comment", or "display" and "I like") ;
- events undergone by the social object **1-6** and/or the Web page/window comprising this social object **1-6** such as "full screen", "resized", "selected (i.e. gaining the focus) for at least a predefined period of time", "zoomed in/out";
- a parameter indicating the level of similarity between a first social object and predecessor(s) and successor(s) social object(s). If this level is very low, it can be considered that this social object is an outlier and then will be discarded.

Furthermore, the social object filter **13** is configured to separate, in a second step, between parallel paths when the user **7** interacts with/explores several different social objects at the same time.

To that end, a clustering algorithm where the number of clusters is not predefined (such as QT (quality threshold) clustering or any other appropriate method known in the art) may be applied, according to the collected information (description of the social objects **1-6** and/or the interactions surrounding them: for example comments, title, name of the actor/personality, tags) . The resulting number of clusters will define the number of parallel paths and the elements of each cluster will constitute the steps (i.e. nodes) of each path. Preferably, parameters of the clustering algorithm have to be set so that the number of clusters is kept relatively small (for example, 1 to 4). It is possible to analyze the dispersion of points around the centroid of the cluster to determine if a cluster is really representative or not. If the dispersion is very high, a cluster (and associated path) may be discarded because not considered as meaningful.

Accordingly, the output of the social object filter **13** is a kind of oriented graph **17-19** over time, where each node represents a social object **1-6,** and the direction of edge is based on the succession of timestamps (i.e. over time) associated to these social objects **1-6.** These graphs are called in the following social object navigation paths **17-19.**

As an illustrative example of parallel paths, the social object navigation path **19** comprises during a certain time period, as it can be seen in figure 1, two parallel paths. That is to say that during this time period, the user **9** is simultaneously exploring two different routes (the social object **1** then **2,** simultaneously with the social object **5).**

The generated social object navigation paths **17-19,** generated by the social object filter **13** are stored in a social path database **14** with respect to their respective users **7-9.**

A unique identifier is allocated, respectively, for each social navigation path **17-19** and for its owner **7-9.**

Advantageously, each users **7-9** can have access through a dedicated interface to the social path database **14,** so that he can filter, edit, save, modify, or more generally interact with their respective social object navigation paths **17-19** (for example, for privacy concerns).

For each user **7,** a social path analyser **15** utilizes the data stored in the social path database **14**
- to compute similarities of his/her recent social object navigation path **17,**respectively, with social object navigation paths **18-19,** of other users **8-9,** stored in the social path database **14;**
- to predict/produce a list of possible interesting content (i.e. future paths) for the user **7:** in other words, estimating the most likely next node(s) (i.e. social object(s)) in the social object navigation path **17 of user 7.**

In one embodiment, the similarity between a first social object navigation path **17** and second social object navigation path **18** is computed according to any method intended for word pattern matching (for example, one can mention the document of D. E. Knuth, J. Morris and V. Pratt, "Fast pattern matching in strings", SIAM Journal on Computing, vol. 6, no. 2, pp. 323-350, 1977). In this case, each social object **1-6** (i.e. each node within a social object navigation path) is considered as a letter. This kind of approach may be generally done for strict pattern matching.

Advantageously, it is possible to relax the constraints and avoid a strict pattern matching by considering the similarities between social objects. Thus, a sequence O₁O₂O₃ (O refers to a social Object) can be considered similar to sequence O₁O'₂O'₃ if the similarities between O₂ and O'₂ and between O₃ and O'₃ are high.

The similarity between two social objects O and O' may be determined according to several parameters such as
- the semantic similarity between their description (for example, video contents relating to a same actor/personality or having the similar title, audio contents belonging to a same album, social objects similarly tagged) by metadata matching using a cosine similarity metric, or any other semantic similarity calculator based on ontological metadata such as WordNet®, SentiWordNet® or ConceptNet®;
- social parameters: similarity of interactions surrounding the two social objects (for example, social objects similarly commented or commented by almost the same users), and possibly additional discriminatory factors, such as the intensity of interactions.

In another embodiment, the computation of similarity between a social object navigation path of a first user and that of a second user is based on fuzzy pattern matching (D. Dubois, H. Prade, and C. Testemale, "weighted fuzzy pattern matching", Fuzzy Sets and Systems, vol. 28, p.313-331, 1988).

The similarity computation of a social object navigation path **17** of a given user **7** with respect to other users social object navigation paths **18-19** permits to keep a list of users Uₖ sharing a portion of similar social object navigation path with the given user **7.** In other words, a similar path or a copy of the social object navigation path **17** is searched within social object navigation paths **18-19** stored in the social path database **14.**

In one embodiment, a similar path to a sub-path composed of a predefined number of the more recent node (i.e. social objects) of the social object navigation path **17** (for example the sub-path 1-2-4) is searched within social object navigation paths **18-19** stored in the social path database **14.**

Accordingly, the parts of the social object navigation paths **18-19** that come after the last social object **4,** that the user **7** is interacting or just interacted with, is estimated to be the next future possible node(s) in the social object navigation path **17** of the user **7.** In the particular illustrative case of figure 1, the most likely next node(s) (i.e. social object(s)) in the social object navigation path **17** of user **7** are
- the sub-path composed of the social object **5** (estimated from the path **18);** and
- the sub-path composed of the social object **6** followed by the social object **21** (estimated from the path **19).**

It is worth noting that there is no global comparison between social objects (i.e. item-by-item) as the temporal dimension is taken into account by examining the succession in time of interaction with social objects **1-6** (notion of path/sequence).

In one embodiment, the similarity of the social object navigation path **17** is computed only with respect to social object navigation paths **18-19** that verify at least one criterion (for example, the language, géolocalisation, virtual community, hobby/interest, age range of users **8-9).** Such information may be supplied to the social path analyser **15** during a configuration phase or retrieved from social platforms **10-11.**

Alternatively or additionally, the similarity of the social object navigation path **17** of the user **7** is computed only with respect to a predefined number of the most recent social object navigation paths **18-19** stored in the social path database **14.**

More generally, the outcome of the social path analyzer **15** is a list of the top-K recommended future social object navigation paths for user **7.**

Preferably, in order to simplify for the user **7** the choice between the various alternative of the future possible social object navigation path that may be determined by the social path analyzer **15,** these paths are passed to a social path browser **16** to be presented in a smart way to the user **7.**

In fact, the social path browser **16** is in charge of presenting to the user **7** the output of the social path analyzer **15.** All results coming from the social path analyzer **15** are potentially relevant to the user **7.** Thus, one of the roles of the social path browser **16** is to clearly distinguish from several possible future paths among social objects key indicators that will help the user **7** in his/her navigation choice. This can be for example path title and social activity or opinion indicators. These indicators will be used as navigation axes. These axes have to be easily and quickly assimilated by the user **7.**

Predicted future paths are presented to the user **7** through a visualization user-friendly tool showing them through different axes, and wherein these visualization axes are determined by the most discriminatory criteria between the possible paths on the basis of the properties of the social objects **5, 6, 21.**

In one embodiment, each possible future path P_{f} is made of a sequence of social objects O_{f,i}. Each path P_{f} is associated to a tag cloud C_{f} defined by a set of weighted keywords. These tag clouds may be obtained by aggregating tag cloud representation of each social object describing the future path P_{f}. The tag cloud can be computed taken into account the semantic description of the social objects and/or the social interactions surrounding the social object through concepts extraction.

The navigation axes are dynamically computed based on the result of the various social paths returned by the social path analyzer **15,** and not predetermined by a taxonomy or ontology.

Navigation axes are associated with the most discriminative criteria between all paths (i.e. all social objects). In order to determine the most discriminative tags/criteria between two tag cloud Cᵢ and Cⱼ,
- the concepts Kᵢ or Kⱼ of high weight which are not semantically close to another concept respectively K'ᵢ and K'ⱼ (from the other tag cloud) are selected;
- the semantic similarity between each pair of remaining concepts (Kᵢ,Kⱼ) is computed. This can be done for example through the hypernym tree distance Wordnet similarity tool (http://marimba.d.umn.edu/cgi-bin/similarity/similarity.cqi);
- the above two steps are repeated for each pair of tag cloud. Then, only concepts Kᵢ which semantic distance is high are kept and become navigation axes as they represent the most discriminative concepts between the various possible paths.

An appropriate user interface is in charge of displaying the recommended paths according to these navigation axes and for handling user interaction.

An illustrative outcome of the above-described method and system for cross-platform social content recommendation is presented in figure 2.

In the left-hand side of figure 2, it is shown a social object **30** (a video content) from a social platform (YouTube®) that a user is currently interacting with ("play": the user is watching this video content). As it can be seen in this figure, other interactions with this content are also possible (such as "like", "share", "reply").

The right-hand side of figure 2 is dedicated to paths composed of social objects from different social platforms (in this illustration case, Facebook®, YouTube®, Flickr® and Wordpress®). These paths correspond to topics (e.g. "fun", "computing", and "business") related to the current social object **30** (i.e. the video content in the left-hand side of figure 2). Navigation choice is helped through social information like
- interaction activity (message count for instance: "Computing", "Business", "Fun"); and
- opinion (presentation features such as the color of the path - shown in figure 2 in continuous, dashed and dash-dotted lines) indicators related to each path.

It results in that, thanks to the above described method and system, a user **7** provided with a communication device **20** that can communicate with at least a social platform **10,** a plurality of intently selected paths of social objects available at different social platforms **10-11** are presented to the user **7** while he/she interacts through the social platform **10.**

Advantageously, according to the above method, the user is proposed different navigation axes, being more interesting than a flat list of recommendations without any kind of indication thereabout to choose.

Advantageously, the above described method and system
- provides a new service, namely it makes possible to exploit the knowledge extracted from cross social platforms to better guide users in the jungle of social content and associated interactions;
- may be considered as a kind of GPS for social objects without that the user has to indicate a destination (i.e. without a predefined navigation path);
- it proposes a paradigm shift in content browsing: transversal and intelligent navigation path through different clear axes characterizing each path;
- it allows to reduce the time a user needs to reach the social object providing the most useful informational environment to him.

It is to be noted that all the components of the described system may be organized in a distributed architecture, as well as may be deployed in the cloud.

Advantageously, the above method enables users to have more efficient social communications through the social networks associated to the social objects which are recommended, and supports his/her navigation in a cross-platform object centered-environment because:
- the social objects are linked to the past path of users, therefore it is more accurate than recommendations based on a basic set of history;
- it is aligned with user's mind thanks to the multiple axes navigation/visualization system (e.g. expression of a goal, take into account the willingness of user to have in-depth or superficial interactions) ;
- it is more intuitive thanks to the visibility of social paths;
- it is an appropriate way to browse contents on mobile devices which are more and more popular and not adapted to the current organization of contents/social objects.

Advantageously, the above method and system is more efficient than existing ones as it avoids using search engines which are internal to social platforms when it is available. The above method and system offer a cross-platform experience and thus gives the user a seamless immersive communication experience within his environment.

## Claims

1. A method for cross-platform content recommendation to a user (7) interacting through a social platform (10), said method comprising the following steps:
- collecting information about users' interactions with social objects (1-6, 21) through a plurality of social platforms (10-11);
- formatting collected information into user-specific social object navigation paths (17-19) over time through the social objects (1-6, 21);
- searching within formatted social object navigation paths (17-19) at least one social object navigation path of a second user (9) including a social object navigation sub-path similar to a recent social object navigation path of a first user (7);
- recommending to the first user (7), at least a social objet (6, 21) following, in the social object navigation path (19) of the second user (9), the social object navigation sub-path.

2. The method of claim 1, further comprising a computation step of similarity between a first social object navigation path (17) and a second social object navigation path (19).

3. The method of the preceding claim, wherein the computation step of similarity between a first social object navigation path and a second social object navigation path includes a step of pattern matching.

4. The method of any of the preceding claims, wherein the collected information comprise at least an address of the social object that a user interacts therewith and a timestamp of the interaction beginning.

5. The method of claim 1 or 2, further comprising a step of filtering noisy data from the collected information.

6. The method of the preceding claim, wherein the filtering step is based on at least one of the following parameters:
- the duration of an interaction with a social object;
- the number of interactions with a social object;
- an event undergone by a social object;
- similarity between a social object and a predecessor social object;
- similarity between a social object and a successor social object.

7. The method of any of the preceding claims, wherein it further comprises a step of separating parallel social object navigation paths when a user is simultaneously interacting with at least two different social objects.

8. The method of the preceding claim, wherein the number of parallel social object navigation paths is determined by a clustering algorithm.

9. The method of any of the preceding claims, wherein it further comprises a step of storing user-specific social object navigation paths (17-19) in a social path database (14).

10. The method of any of the preceding claim wherein it further comprises a step of determining a discriminatory criterion between the recommended social objects.

11. The method of the preceding claim, wherein it further comprises a step of presenting of the recommended social objects into different navigation axes in function of the determined discriminatory criterion.

12. A system for cross-platform content recommendation to a user (7) interacting through a social platform (10), said system comprising:
- means (12) for collecting information about users' interactions with social objects (1-6, 21)through a plurality of social platforms (10-11);
- means (13) for formatting collected information into user-specific social object navigation paths (17-19) over time through the social objects (1-6, 21);
- means (15) for searching within formatted social object navigation paths (17-19) at least one social object navigation path of a second user (9) including a social object navigation sub-path similar to a recent social object navigation path of a first user (7);
- means (16) for recommending to the first user (7), at least a social objet (6, 21) following, in the social object navigation path (19) of the second user (9), the social object navigation sub-path.

13. The system of the preceding claim, wherein the means for searching are further programmed to compute similarity between a first social object navigation path (17) and a second social object navigation path (19).

14. The system of claim 12 or 13, further comprising means (16) for determining a discriminatory criterion between the recommended social objects.

15. Computer program implemented on a processing unit of a computer, said program including code sections for performing instructions corresponding to the steps of a method according to any of claims 1-11.
